# EUROPEAN PATENT APPLICATION

(11) **EP 2 088 078 A2**
(43) Date of publication of application: **12.08.2009**
(21) Application number: 09152232.6
(22) Date of filing: 06.02.2009
(51) Int. Cl.: B64D 1/06

(54) **A door structure for a compartment in the fuselage or wing of an aircraft**

(30) Priority: 08.02.2008 IT TO20080099
(71) Applicant: Alenia Aeronautica S.p.A., 80038 Pomigliano D'Arco (Napoli) (IT)
(72) Inventor: Lugaro, Luigi, 12084 Mondovi' (Cuneo) (IT); Maratea, Marco, 10149 Torino (IT); Rissone, Luca, 14100 Asti (IT)
(74) Representative: Rondano, Davide

(57) **Abstract**

A door structure (10) for a compartment in the fuselage or wing of an aircraft, particularly for a bomb bay is described, which comprises a hatch (12) pivoted about a fixed axis of rotation (L) such that it rotates between a closed position and an open position which is substantially positioned at 90° to the closed position, a release unit (18) mounted on the hatch (12) and arranged to carry in a releasable way a load (20), and a plurality of driving mechanisms (16, 17) for causing the hatch (12) to rotate between the open and closed positions about the axis of rotation (L).

## Description

The present invention relates to a door structure for a compartment in the fuselage or wing of an aircraft, particularly for a bomb bay.

Bomb bays of aircraft are typically closed by hatches which are pivoted on the fuselage of the aircraft about longitudinal axes of rotation, i.e. parallel to the axis of the fuselage, and which are moved between open and closed positions by means of driving mechanisms which are separate and independent from the mechanisms for releasing the loads (usually weapons) housed in the bomb bays. The procedure of releasing a missile or a bomb therefore includes in sequence the operations of rotating the hatch of the bomb bay from the closed to the open position, moving the release unit to the specified position for ejection of the weapon, ejecting the weapon, returning the release unit to the idle position and returning the hatch of the bomb bay to the closed position. This procedure is rather lengthy, and consequently the period for which the hatch of the bomb bay remains open, thus causing the aircraft to be more easily visible by radar, is correspondingly lengthy during the weapon ejection procedure. Thus there is a need to minimize the period for which the bomb bay remains open during the weapon ejection procedure, in order to ensure a low radar visibility of the aircraft without compromising the security of the ejection procedure.

US patent 2 947 533 discloses a door structure for a bomb bay of an aircraft comprising a hatch on which a weapon release unit is directly mounted, in such a way that the movement of the hatch from the closed to the open position is sufficient in itself to bring the weapon, which may be a bomb or a missile, to the ejection position. However, this known solution has a number of drawbacks, particularly the fact that the hatch driving mechanism is rather complicated, and the fact that a 180°-degree rotation is required to bring the release unit to the correct position for ejection, thus increasing the period of time required to carry out the ejection procedure.

The object of the present invention is therefore to provide a door structure for a compartment in the fuselage or wing of an aircraft, particularly for a bomb bay, which is not subject to the drawbacks of the prior art discussed above, and which is also more advantageous than the prior art in terms of weight and cost.

These and other objects are fully achieved according to the invention by means of a door structure as defined in independent Claim 1.

Further advantageous features of the invention are specified in the dependent claims.

Briefly, the invention is based on the idea of providing a door structure comprising a hatch which is pivoted about a fixed axis of rotation so as to rotate between a closed position and an open position which is substantially positioned at 90° to the closed position, a release unit mounted on the hatch and arranged to carry in a releasable way a load, such as a weapon, and a driving mechanism for causing the hatch to rotate between the open position and the closed position about the aforesaid axis of rotation.

It is thus possible to use the opening movement of the hatch in order to bring the load carried by the release unit to the outside of the bomb bay, in such a way that the load can be ejected from the aircraft in completely secure conditions, and consequently to use only one driving mechanism to move both the hatch and the release unit. A bomb bay provided with such a door structure is obviously less complicated than a conventional bomb bay having separate driving mechanisms for the hatch and for the release unit, and the cycle times (for opening, release, and closing) are significantly reduced, thus reducing the radar visibility of the aircraft. The invention also allows to overcome the problems relating to the necessity of synchronizing the driving mechanisms of the hatch and the release unit in the conventional bomb bays. A door structure according to the present invention is also more advantageous than the prior art in terms of weight and cost.

Other features and advantages of the invention will be made clear by the following detailed description, provided purely by way of non-limiting example, with reference to the appended drawings, in which:
Figure 1 is an axonometric view of a door structure for a bomb bay of an aircraft according to a preferred embodiment of the present invention, without a weapon;
Figures 2 to 9 are axonometric views showing in sequence the different steps of the procedure for releasing the weapon by means of the door structure of Figure 1;
Figures 10 to 14 are axonometric views on an enlarged scale, showing the different configurations assumed by one of the driving mechanisms of the door structure of Figure 1 in the movement from the closed to the open position;
Figure 15 is an axonometric view showing in detail a driving mechanism of a door structure for a bomb bay of an aircraft according to a variant preferred embodiment of the present invention; and
Figures 16 to 19 are partially transparent axonometric views on an enlarged scale, showing the different configurations assumed by the driving mechanism of Figure 15 in the movement from the closed to the open position, and more particularly a locking device for keeping the driving mechanism locked in the aforesaid open position.

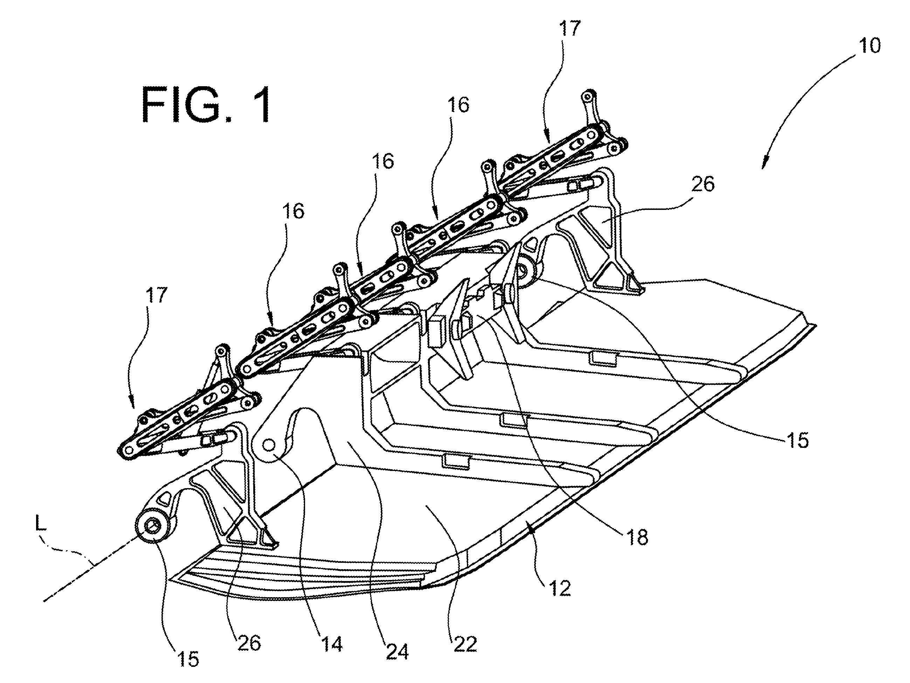

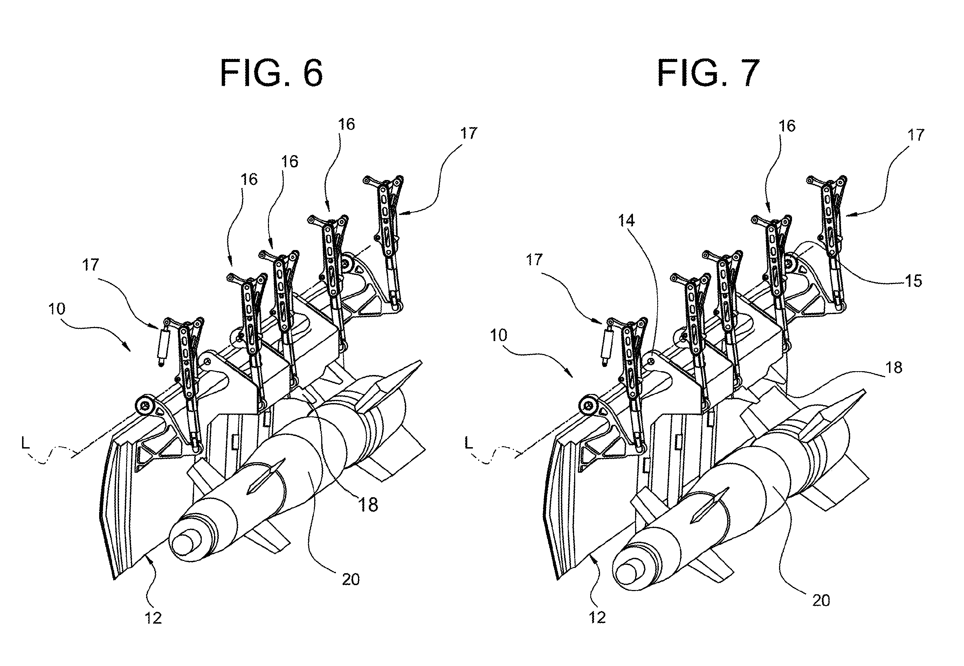

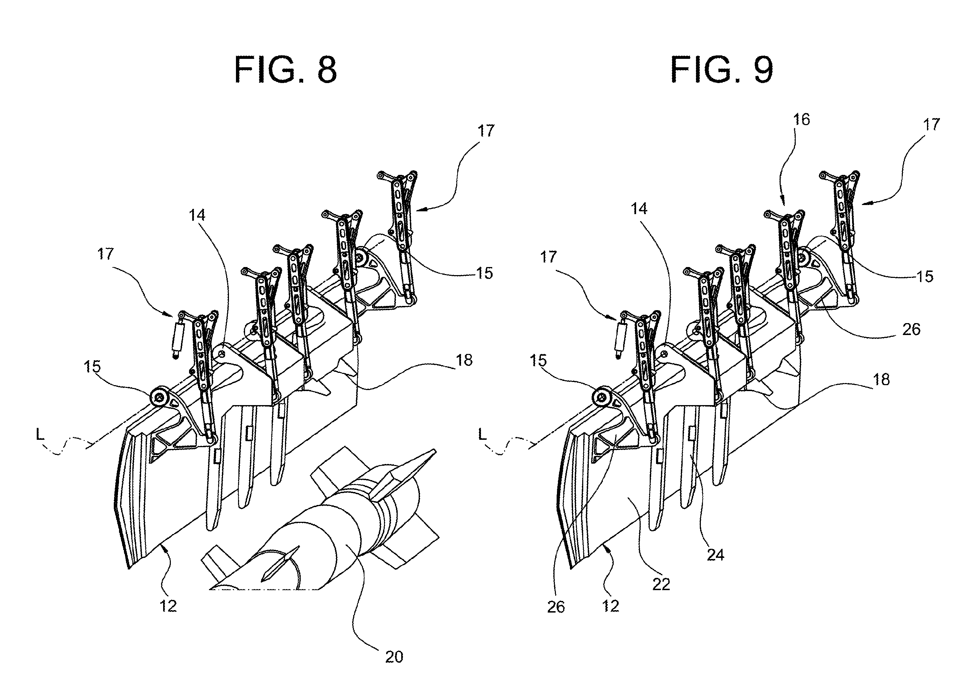

With reference first to Figure 1, a door structure for a compartment in the fuselage or wing of an aircraft, in the present case for a bomb bay, is generally indicated 10, and essentially comprises:
a hatch 12 having hinges 14 and 15 for pivoted connection of the hatch to the aircraft structure about an axis of rotation L, which in the present case is parallel to the longitudinal direction of the aircraft;
a plurality of driving mechanisms 16 and 17, operating in parallel to cause the hatch 12 to rotate between a closed position (Figure 1) and an open position (Figures 6 to 9) which is substantially rotated through 90° with respect to the closed position; and
a release unit 18 which is fixed to the hatch 12 in such a way that it can rotate together with it about the axis of rotation L, and which is arranged to carry in a releasable way a load 20, in the present case a weapon (a missile or bomb).

The hatch 12 comprises in turn a substantially flat closing element 22 and a supporting structure 24 which carries both the closing element 22 and the release unit 18 and which is pivoted on the fuselage or wing of the aircraft by means of the hinges 14. The release unit 18 is of a known type and is therefore not described in detail herein.

In the illustrated embodiment, five driving mechanisms 16, 17 are provided, these mechanisms being substantially identical to each other, wherein the three central mechanisms (indicated 16) are connected to the supporting structure 24, while the two lateral mechanisms (indicated 17) are connected to corresponding bracket members 26 which are fixed at one end to the closing element 22 and pivoted at the other end on the fuselage or wing of the aircraft by means of the hinges 15. Clearly, the number of driving mechanisms stated above is purely indicative and can be varied according to the specific requirements. If necessary, it would be possible to omit the central driving mechanisms 16, or preferably the lateral driving mechanisms 17.

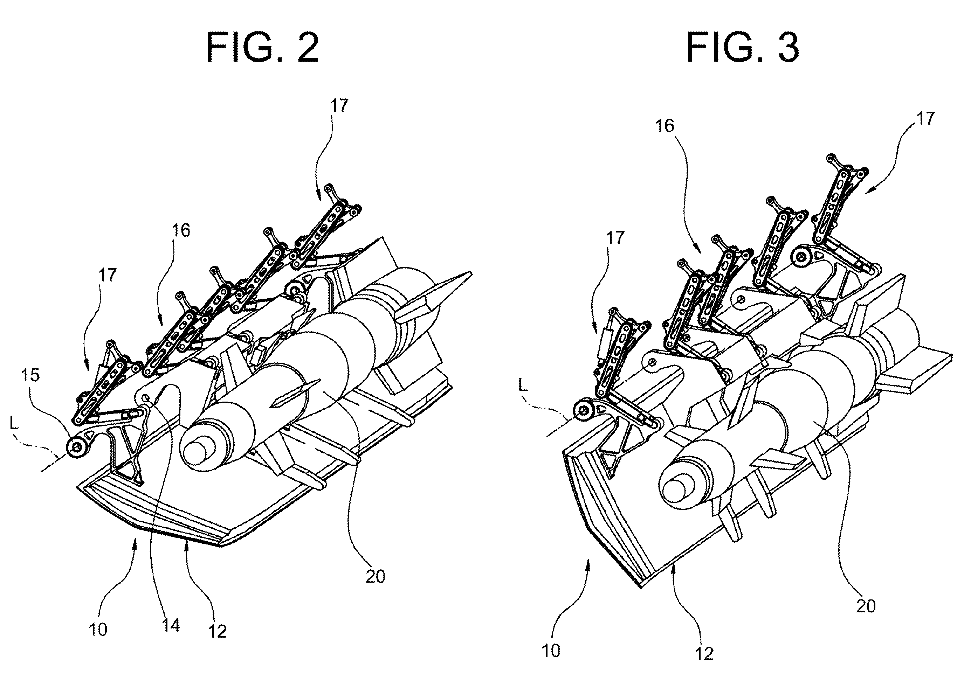

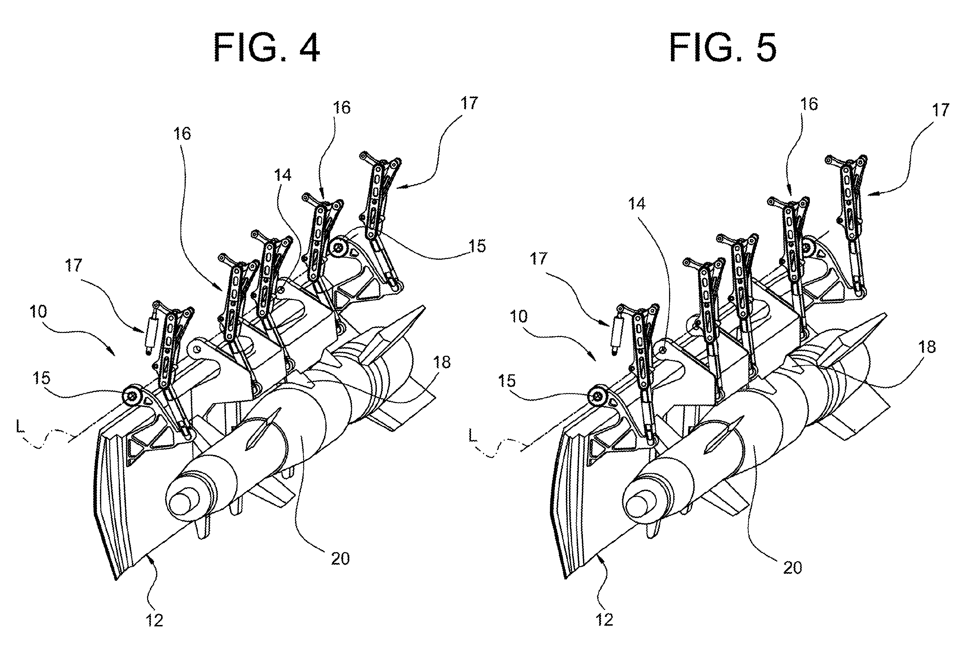

Figures 2 to 9 show in sequence the different steps of a procedure for releasing the weapon 20 using the door structure 10 according to the invention. More specifically, Figures 2 to 5 show the step of opening the bomb bay, in which the hatch 12 is moved by means of the driving mechanisms 16, 17 from the closed to the open position, rotating through approximately 90° about the axis of rotation L. Figures 6 to 9 show the step of ejecting the weapon 20, which starts only after the hatch 12 has reached the open position and consists in the ejection of the weapon 20, in a known way, by the release unit 18. The next step (not shown) consists in closing the bomb bay by rotation of the hatch 12 about the axis of rotation L from the open to the closed position.

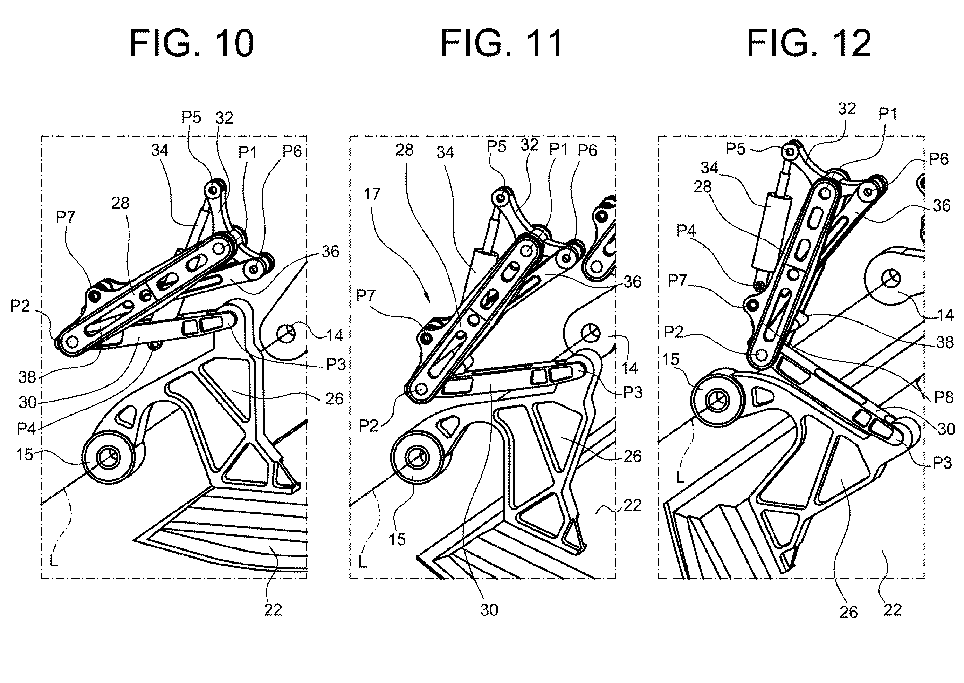

With reference to Figures 10 to 14 in particular, one of the driving mechanisms (in this case a lateral driving mechanism 17) will now be described in detail, on the understanding that the description of this mechanism is to be considered applicable to all the other mechanisms.

The driving mechanism 17 essentially comprises:
a first oscillating arm 28, a first end of which is pivoted on the aircraft structure (fuselage or wing) at a point P1;
a second oscillating arm 30, a first end of which is pivoted on a second end of the first oscillating arm 28 at a point P2, and a second end of which is pivoted on the bracket member 26 at a point P3;
a rocker lever 32 pivoted on the aircraft structure at an intermediate point of the lever coinciding with the point P1;
a first linear actuator 34 (which is a hydraulic jack in the illustrated example), a first end of which (the cylinder end) is pivoted on the aircraft structure at a fixed point P4 and a second end of which (the piston rod end) is pivoted on a first end of the rocker lever 32 at a point P5;
a pull-rod 36, a first end of which is pivoted on a second end of the rocker lever 32 at a point P6;
a locking member 38 which is rotatable with respect to the first oscillating arm 28 about a point P7 located on this arm at a position offset with respect to the points P1 and P2, and which is pivoted on a second end of the link 36 at a point P8; and
a second linear actuator (not shown in Figures 10 to 14), preferably in the form of a spring actuator, a first end of which (the cylinder end) is pivoted on the first oscillating arm 28 and a second end of which (the piston rod end) is pivoted on the locking member 38 so as to cause this member to rotate about the point P7.

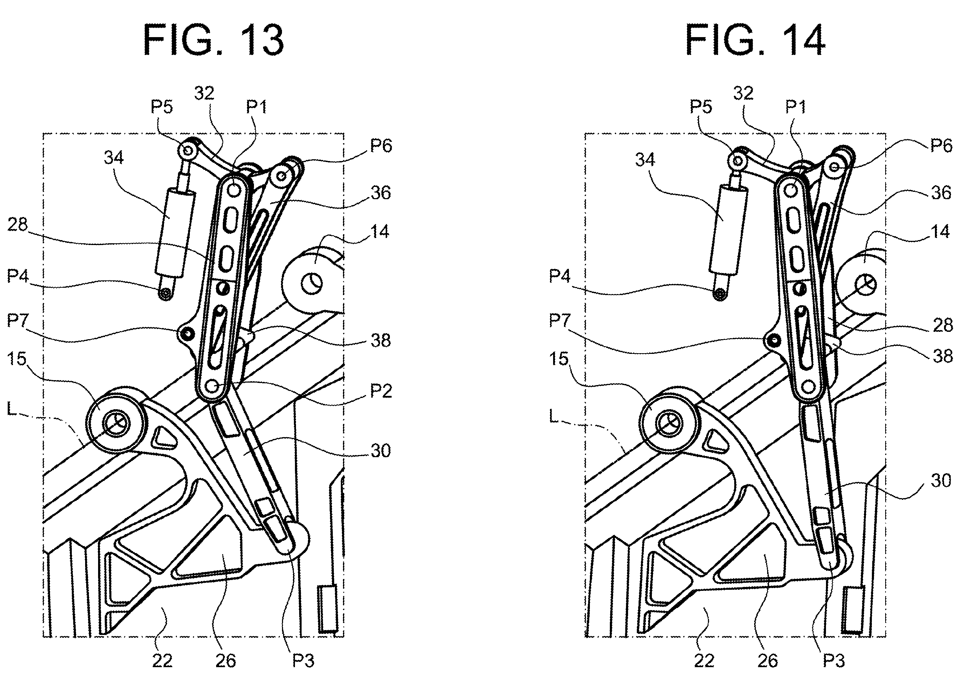

In the closed position of the hatch 12 (Figure 10), the first linear actuator 34 is extended and the two oscillating arms 28 and 30 form an acute angle. To move the hatch 12 to the open position of Figure 14, the actuator 34 is retracted so as to cause the rocker lever 32 to rotate about the point P1, in the anticlockwise direction as seen by an observer of the drawings. In turn, the rocker lever 32 causes the point P6 of pivoting on the link 36 to be rotated upwards about the point P1, and therefore, by means of the pull-rod 36, causes the two oscillating arms 28 and 30 to open out until they are brought into a substantially aligned condition (Figure 14) Consequently, the bracket member 26 and the hatch 12 drivingly connected to it are made to rotate in the clockwise direction about the axis of rotation L. The driving mechanism is configured in such a way that it can cause the hatch to rotate through 90°, though using a linear actuator 34 having a short length and stroke. This enables both the overall dimensions and the weight of the driving mechanism to be minimized.

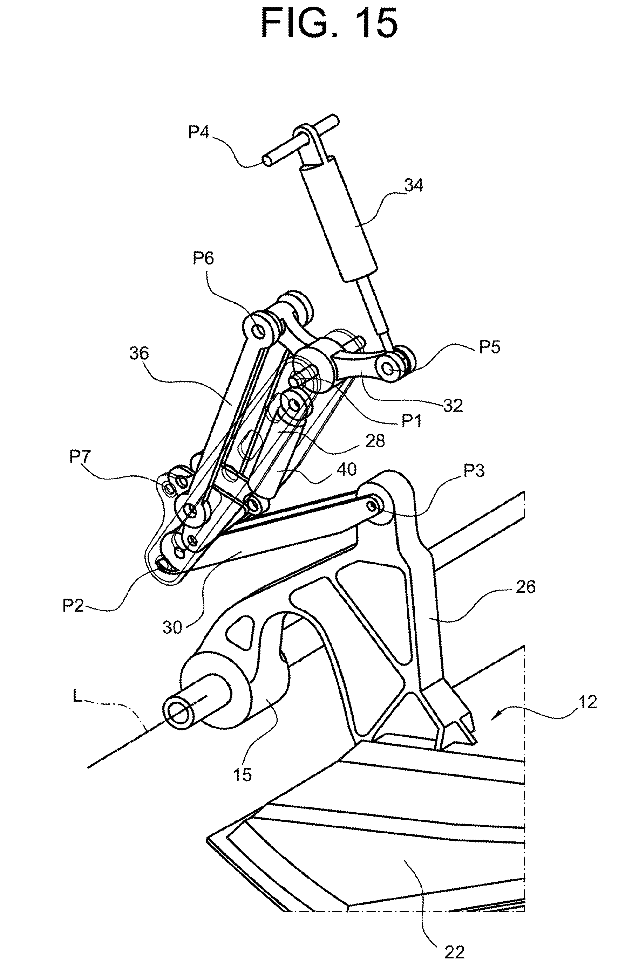

A variant embodiment of the driving mechanism according to the invention is shown in Figure 15, in which the same reference numerals have been given to parts and elements identical or corresponding to those of Figures 10 to 14. Substantially, this variant differs from the embodiment of Figures 10 to 14 solely in that the linear actuator 34 which brings about the opening and closing movement of the hatch 12 is configured in such a way that its extension causes the hatch to move from the open to the closed position, instead of from the closed to the open position. Apart from that, the description of the embodiment shown in Figures 10 to 14 applies.

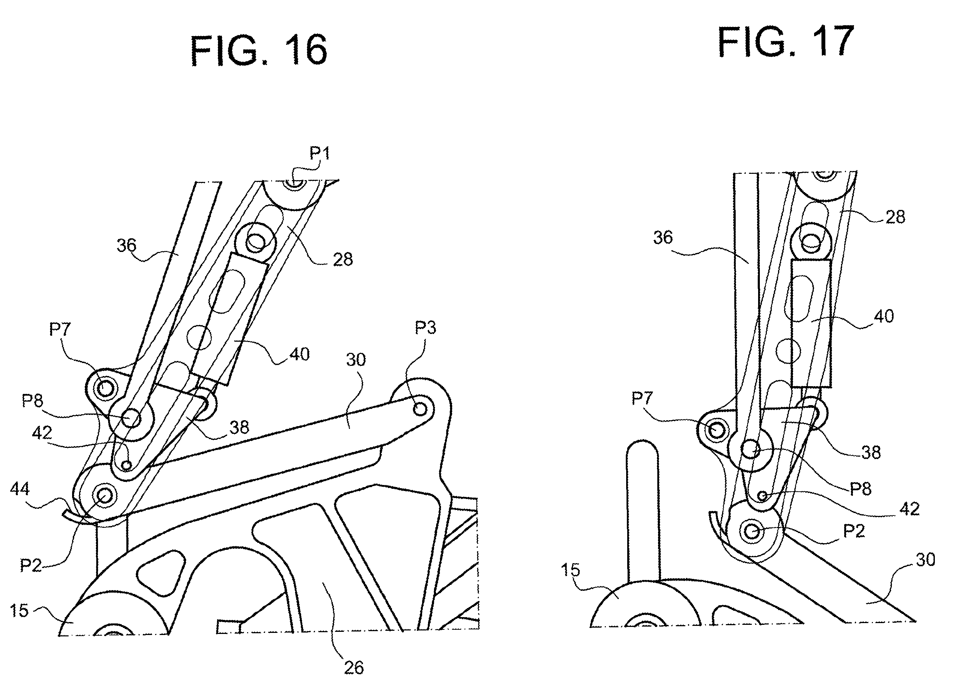

Finally, Figures 16 to 19 show in detail a locking device for keeping the driving mechanism locked in the open position during the step of releasing the load 20, in order to prevent the load ejection forces, which act on the release unit 18, from causing the hatch 12 to close before the completion of the release step and from compromising therefore the security of the procedure. These figures relate specifically to the embodiment of Figure 15, but the following description of the locking device is to be considered applicable to the embodiment of Figures 10 to 14 as well.

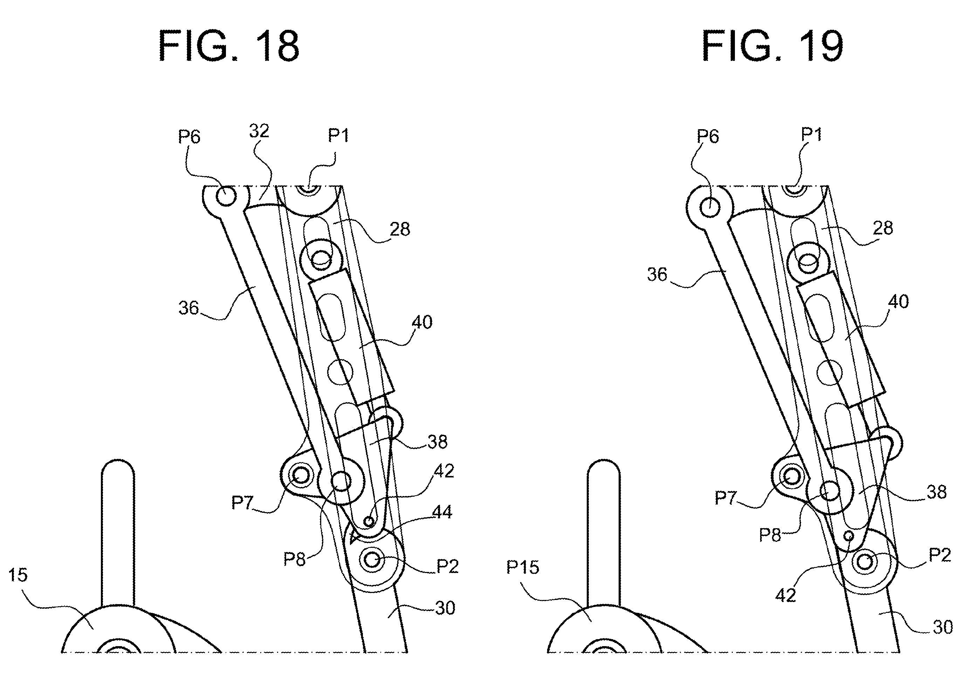

The locking device includes the locking member 38 and the associated linear spring actuator, indicated 40, which causes this member to rotate about the point P7 between a locking position (Figure 19), in which a pin 42, carried by the locking member 38 and extending parallel to the axis of rotation of this member, engages in a pair of recesses 44 (only one of which is shown) provided in the end portion of the second oscillating arm 30 connected pivotably to the first oscillating arm 28, and an unlocking position (Figure 18), in which the pin 42 is disengaged from the recesses 44.

The locking member 38 is automatically brought to the locking position by the linear spring actuator 40 as soon as the pin 42 is at the position of the recesses 44, in other words as soon as the hatch 12 has reached the open position, thus preventing any oscillation of the hatch about the axis of rotation L during the step of ejecting the load 20. On completion of the step of ejecting the load 20, the hatch 12 is closed by the extension of the linear actuator 34 which initially, by means of the rotation (in the clockwise direction) of the rocker lever 32 and the consequent action of the pull-rod 36, causes the locking member 38 to rotate about the point P7, overcoming the reaction of the linear spring actuator 40, and consequently causes the pin 42 to be disengaged from the recesses 44. Once the pin 42 has been disengaged, when the linear spring actuator 40 is in its condition of maximum retraction, the mechanism is unlocked and the travel of the linear actuator 34 can therefore continue, thus returning the whole system to the closed position.

Naturally, the principle of the invention remaining unchanged, the embodiments and the details of construction can vary widely from what has been described and illustrated purely by way of non-limiting example.

For example, the release unit can be arranged to carry a load other than a weapon, such as a fuel tank.

## Claims

1. A door structure (10) for a compartment in the fuselage or wing of an aircraft, particularly for a bomb bay, comprising:
a hatch (12) pivoted about a fixed axis of rotation (L) so as to rotate between a closed position and an open position arranged substantially at 90° to the closed position;
a release unit (18) mounted on the hatch (12) and arranged to carry in a releasable way a load (20); and
at least one driving mechanism (16, 17) for causing the hatch (12) to rotate between said open and closed positions about said axis of rotation (L).

2. A door structure according to Claim 1, in which the hatch (12) comprises a closing element (22) and a supporting structure (24) which carries both the closing element (22) and the release unit (18) and is provided with hinges (14) for pivoting connection to the aircraft structure.

3. A door structure according to Claim 2, comprising a plurality of driving mechanisms (16, 17), at least one (16) of which is connected to the supporting structure (24) of the hatch (12).

4. A door structure according to any one of the preceding claims, in which said at least one driving mechanism (16, 17) comprises:
a first oscillating arm (28), a first end of which (P1) is pivoted on the aircraft structure;
a second oscillating arm (30), a first end of which is pivoted (P2) on a second end of the first oscillating arm (28), and a second end of which is pivoted (P3) on the hatch (12);
a rocker lever (32) pivoted (P1) at an intermediate point thereof on the aircraft structure at the same point at which the first oscillating lever (28) is pivoted on the aircraft structure;
a first linear actuator (34), a first end of which is pivoted (P4) on the aircraft structure and a second end of which is pivoted (P5) on a first end of the rocker lever (32); and
a link (36), a first end of which is pivoted (P6) on a second end of the rocker lever (32).

5. A door structure according to Claim 4, in which the first linear actuator (34) is a hydraulic jack having a cylinder and a piston provided with a rod, in which the cylinder is pivoted on the aircraft structure and the piston rod is pivoted on the rocker lever (32).

6. A door structure according to Claim 4 or Claim 5, in which said at least one driving mechanism (16, 17) also comprises a locking member (38) arranged to prevent the rotation of the first and the second oscillating arms (28, 30) with respect to each other.

7. A door structure according to Claim 6, in which the locking member (38) is pivoted on the first oscillating arm (28) about a point (P7) located on this arm at a position which is offset with respect to the pivot points (P1, P2) of this arm, and carries a pin (42) which extends parallel to the axis of rotation of the locking member (38) and which can engage in a pair of recesses (44) provided in the second oscillating arm (30).

8. A door structure according to Claim 7, in which said at least one driving mechanism (16, 17) also comprises a second linear actuator (40) for causing the locking member (38) to rotate about the point (P7) at which it is pivoted on the first oscillating arm (28).

9. A door structure according to Claim 8, in which said second linear actuator (40) is a spring actuator.

10. An aircraft having a bomb bay provided with a door structure (10) according to any one of the preceding claims.
